Europäisches Patentamt

European Patent Office

Office européen des brevets

(19)

(11) Numéro de publication: **0 148 798**
**B1**

(12) ## FASCICULE DE BREVET EUROPEEN

(45) Date de publication du fascicule du brevet:
**30.03.88**

(21) Numéro de dépôt: **85400017.1**

(22) Date de dépôt: **07.01.85**

(51) Int. Cl.⁴: **F 16 K 31/122**

(54) Vannes à commande par piston.

(30) Priorité: **09.01.84 FR 8400208**

(43) Date de publication de la demande:
**17.07.85 Bulletin 85/29**

(45) Mention de la délivrance du brevet:
**30.03.88 Bulletin 88/13**

(84) Etats contractants désignés:
**AT BE CH DE GB IT LI LU NL SE**

(56) Documents cités:
**DE - A - 2 638 372**
**DE - C - 754 938**
**FR - A - 2 519 403**
**US - A - 2 643 667**
**US - A - 3 429 321**

(73) Titulaire: **JOUCOMATIC S.A., 32, Avenue Albert-1er,
F-92506 Rueil-Malmaison (FR)**

(72) Inventeur: **Tosseghini, Hugo, 42, rue du Clos d'en Haut,
F-78700 Conflans-Ste-Honorine (FR)**

(74) Mandataire: **Armengaud Ainé, Alain, Cabinet
ARMENGAUD AINE 3 Avenue Bugeaud, F-75116 Paris
(FR)**

## Description

La présente invention est relative à des perfectionnements apportés aux vannes à commande par piston. On sait que de telles vannes comportent un corps de vanne muni de voies d'admission et d'évacuation, dont la communication peut être interrompue par un clapet solidaire d'une tige reliée à un piston sur lequel s'exerce la pression de pilotage de la vanne. Dans un tel type de vanne, il existe principalement deux variantes:

a) les vannes «normalement fermées», dans lesquelles, au repos, le piston de commande, sous l'effet d'un ressort, applique le clapet sur son siège, la vanne ne s'ouvrant que lors de l'admission de la pression de pilotage;

b) les vannes «normalement ouvertes», dans lesquelles, au repos, le piston de commande, sous l'effet d'un ressort, maintient le clapet dégagé de son siège, la vanne ne se fermant que lors de l'admission de la pression de pilotage.

On connaît (FR-A-2 519 403) une vanne à commande par piston comportant un corps de vanne muni des voies d'admission et d'évacuation, dont la communication peut être interrompue par un clapet solidaire d'une tige reliée à un piston sur lequel s'exerce la pression de pilotage de la vanne, cette dernière étant munie d'une tête réversible pourvue de l'orifice d'admission de la pression de pilotage et dans laquelle est placé le piston de commande sur lequel est monté le clapet.

On connaît par ailleurs (DE-C-754 938) une vanne à commande par piston comportant des ressorts basse et forte pression et des moyens pour annuler l'action du ressort forte pression.

Ces vannes, de type connu, ne permettent pas, avec un seul type de vanne, d'assurer un mode de fonctionnement normalement fermé ou normalement ouvert, et, simultanément, un fonctionnement sous pression de pilotage normale et sous faible pression de pilotage, avec un nombre minimum de pièces.

L'invention se propose, en conséquence, d'apporter une vanne à commande par piston du type comportant un corps de vanne muni des voies d'admission et d'évacuation et dont la communication peut être interrompue par un clapet solidaire d'une tige reliée à un piston sur lequel s'exerce la pression de pilotage de la vanne, cette dernière comportant une tête réversible munie de l'orifice d'admission de la pression de pilotage, le piston de commande étant placé, de façon connue, dans ladite tête réversible recevant le clapet de la vanne, et des premier et second ressorts de rappel, cette vanne étant caractérisée en ce que le second ressort de rappel, ou ressort forte pression, est interposé entre deux pièces dites «ponts tareurs», en ce que l'un des ponts tareurs est mobile par rapport à l'autre, de manière à l'écarter du piston de commande et à annuler l'effet du second ressort de rappel, et en ce que ce pont tareur mobile comporte des ergots pouvant coulisser le long de rampes ménagées dans une pièce du corps, dite chapeau solidaire, lors de la rotation de ce dernier pour écarter ce pont tareur du piston de commande.

On comprend que, grâce à la combinaison tête réversible-pont tareur mobile, on réalise une vanne unique pouvant, sans montage de pièces supplémentaires et avec un minimum d'éléments, assurer:

–un fonctionnement en mode normalement fermé, lorsque la pression de pilotage s'exerce sous le piston de commande;

–un fonctionnement en mode normalement ouvert, lorsque la pression de pilotage s'exerce sur le piston de commande;

–un fonctionnement sous pression de pilotage normale, grâce au second ressort de rappel; et

–un fonctionnement sous faible pression de pilotage, par la mise hors service du second ressort de rappel sur le piston de commande, par l'intermédiaire du pont tareur mobile.

D'autres caractéristiques et avantages de cette invention ressortiront de la description faite ci-après en regard des dessins annexés, qui en illustrent un exemple de réalisation dépourvu de tout caractère limitatif. Sur les dessins, qui représentent la tête de pilotage en position sous tension:

–la figure 1 est une vue en coupe longitudinale d'une vanne selon l'invention, en mode de fonctionnement «normalement fermé» et pression normale;

–la figure 2 est une vue en coupe, similaire à la figure 1, montrant la vanne en mode de fonctionnement »normalement fermé» et basse pression;

–la figure 3 est une vue partielle, en élévation, représentant la disposition du pont tareur mobile dans le corps;

–la figure 4 est une vue similaire aux figures 1 et 2, représentant la vanne selon l'invention en mode de fonctionnement «normalement ouvert»; et,

–la figure 5 est une vue de détail, en coupe verticale, illustrant la fixation du presse-étoupe sur le corps de la vanne.

En se référant aux dessins, on voit qu'une vanne selon l'invention comprend un corps de vanne 10 muni des deux voies 12, 14 dont la communication peut être interrompue par le clapet 16, dont la tige 18 est solidaire d'un piston de commande 20, rappelé par ressort et actionné par une pression de pilotage admise par un orifice de pilotage 22, ménagé dans la tête 24 de la vanne.

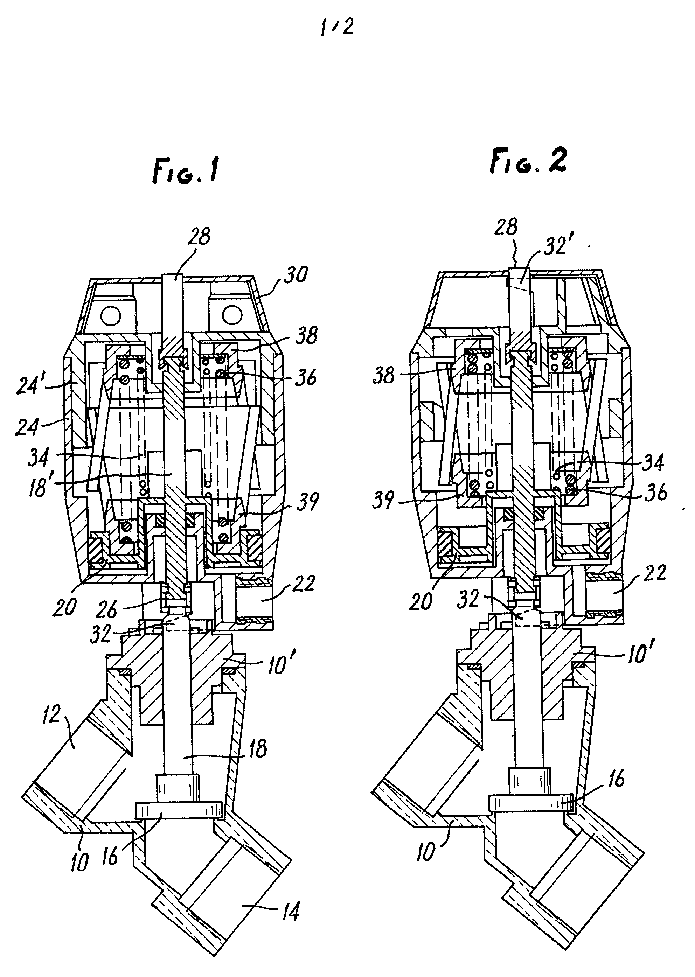

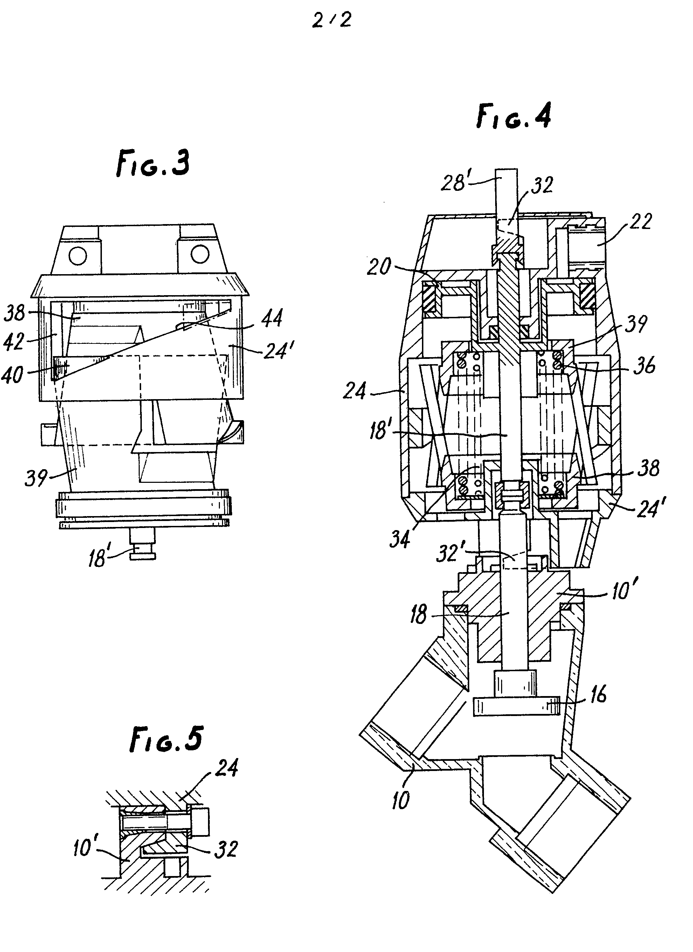

Selon l'invention, la tête 24 est réversible (les figures 1 et 2 montrent la tête dans une position, et la figure 4 montre la tête dans une autre position), et elle est traversée par une tige 18' sur laquelle est montée, à son extrémité inférieure, la tige 18 du clapet 16, par l'intermédiaire d'un manchon d'attelage 26. Sur l'autre extrémité de la tige 18' peut être fixée une indication optique 28 de la position du clapet 16.

La tête 24, protégée à sa partie supérieure par un capot 30, comporte à ses parties supérieure et inférieure, des moyens 32, 32' pour assurer sa fixation sur le corps 10. La figure 5 illustre le mode de fixation de la tête 24 sur le presse-étoupe 10' du corps 10, par l'intermédiaire de la pièce de fixation 32.

Dans la tête réversible 24 est disposé un premier ressort de rappel, dit ressort de basse pression 34, qui appuie directement sur le piston de commande 20, et un second ressort de rappel, dit ressort forte pression 36, qui est interposé entre deux pièces dites ponts tareurs 38 et 39, la disposition étant telle que le pont tareur 39 peut venir appuyer sur le piston de commande 20 sous l'effet du ressort 36 (position de la figure 1), ou peut être maintenu écarté du piston 20 (figure 2). A cet effet, (figure 3) le pont tareur est mobile dans la tête 24, et il comporte des tétons tels que 40, pouvant glisser le long des surfaces inclinées 44 de lumières telles que 42, prévues dans la partie supérieure ou chapeau sélecteur 24' de la tête 24. On comprend que la rotation de ce chapeau sélecteur 24' fait coulisser les tétons 40 du pont tareur 39 le long des rampes 44, ce qui amène le pont tareur en position haute (figure 2), dégageant ainsi le piston 20 de l'action du ressort 36, qui appuie sur le pont tareur 39. On décrira maintenant les divers modes de fonctionnement de la vanne selon l'invention.

1°–Fonctionnement mode «normalement fermé» et pression de pilotage normale ou élevée, c'est-à-dire avec les deux ressorts de rappel en action (figure 1):

Dans ce mode de fonctionnement, le pont tareur 39 occupe la position représentée sur la figure 1 (position basse), et il appuie sur le piston de commande 20, qui est donc soumis à la pression des deux ressorts de rappel 34 et 36. Au repos, le clapet 16 est donc fermé, sous l'effet exercé par les deux ressorts sur le piston 20. Lors de l'admission de la pression de pilotage par l'orifice 22, le piston de commande 20 et le pont tareur 39 se soulèvent à l'encontre de l'effort de rappel des ressorts 34 et 36, et le clapet 16 s'ouvre. Dès que cesse l'admission de la pression de pilotage, les ressorts ramènent le piston de commande en position de fermeture du clapet.

2°–Fonctionnement en mode «normalement fermé» et faible pression de pilotage (figure 2):

Dans ce mode de fonctionnement, un seul ressort de rappel, le ressort basse pression 34, doit agir sur le piston 20. Pour annuler l'effet du ressort forte pression 36, l'utilisateur fait tourner le chapeau sélecteur 24' (figure 3). On a vu ci-dessus que cette rotation provoque le déplacement vers le haut de la tête du pont tareur 39, qui cesse alors d'appuyer sur le piston de commande 20. Il en résulte que, seul le ressort 34 agit sur le piston.

Au repos, c'est-à-dire en l'absence de pression de pilotage, la vanne est normalement fermée, le clapet 16 étant appliqué sur son siège sous l'effet de rappel du ressort 34. Si l'on admet une faible pression de pilotage par l'orifice 22, celle-ci repousse le piston de commande à l'encontre de l'action du ressort 34, et le clapet s'ouvre. Dès que la pression de pilotage cesse, le clapet 16 se referme sous l'action du ressort de rappel 34.

On remarque que l'indicateur optique 28 permet de contrôler l'état de fonctionnement (ouvert ou fermé) du clapet 16.

3°–Fonctionnement en mode «normalement ouvert» (figure 4):

Pour ce mode de fonctionnée, la tête réversible 24 doit être retournée par rapport à la position qu'elle occupe en fonctionnement normalement fermé (figures 1 et 2), de manière que la pression de pilotage s'exerce au-dessus du piston de commande 20. L'utilisateur place donc la tête dans la position illustrée par la figure 4, la tête étant maintenue sur le presse-étoupe 10' du corps de vanne 10 par les moyens de fixation 32'.

Au repos, en l'absence de pression de pilotage, le clapet 16 est ouvert, car le piston de commande est rappelé vers le haut sous l'effet du ressort de rappel 34, auquel s'ajoute éventuellement l'action du ressort 36, de la même façon que précédemment. Lors de l'admission de la pression de pilotage par l'orifice 22 (cette pression peut être une pression normale, si les deux ressorts 34 et 36 agissent sur le piston de commande, ou une faible pression, si seul le ressort 34 est en action, ce qui est le cas de la figure 4), le piston de commande 20 est repoussé vers le bas, et le clapet 16 se ferme. Dès que cesse l'admission de la pression de pilotage, le clapet s'ouvre, sous l'effet du rappel du ressort 34, et éventuellement du ressort 36. Ici encore, l'état du fonctionnement de la vanne est contrôlé par l'indicateur 28', solidaire de la tige 18' du piston.

Il résulte de la description qui précède que l'invention apporte une vanne perfectionnée permettant, avec un minimum de pièces, de résoudre de nombreux problèmes d'application.

## Revendications

1. Vanne à commande par piston du type comportant un corps de vanne (10) muni des voies d'admission et d'évacuation (12, 14) et dont la communication peut être interrompue par un clapet (16) solidaire d'une tige (18) reliée à un piston (20) sur lequel s'exerce la pression de pilotage de la vanne, cette dernière comportant une tête réversible (24) munie de l'orifice (22) d'admission de la pression de pilotage, le piston de commande (20) étant placé dans ladite tête réversible recevant le clapet (16) de la vanne, et des premier et second ressorts de rappel (34, 36), cette vanne étant caractérisée en ce que le premier ressort le rappel (34) est un ressort basse pression, en ce que le second ressort de rappel (36), ou ressort forte pression, est interposé entre deux pièces dites «ponts tareurs» (38, 39), en ce que l'un des ponts tareurs (39) est mobile par rapport à l'autre, de manière à l'écarter du piston de commande (20) et à annuler l'effet du second ressort de rappel (36), et en ce que ce pont tareur mobile (39) comporte des ergots (40) pouvant coulisser le long de rampes (44) ménagées dans une pièce du corps, dite chapeau sélecteur (24'), lors de la rotation de ce dernier pour écarter ce pont tareur du piston de commande (20).

2. Vanne selon la revendication 1, caractérisée en ce que ladite tête réversible (24) comporte, à ses parties supérieure et inférieure, des moyens de fixation (32, 32') permettant son montage dans un sens ou dans l'autre sur ledit corps de vanne (10), afin d'obtenir une position de fonctionnement en mode «normalement fermé», dans laquelle la pression de pilotage s'exerce sous le piston de commande, et une position de fonctionnement en mode «normalement ouvert», dans laquelle la pression de commande s'exerce au-dessus du piston de commande.

3. Vanne selon l'une des revendications 1 ou 2, caractérisée en ce que la tige (18') du piston de commande est munie d'un indicateur optique (28, 28') qui permet de contrôler le mode de fonctionnement de la vanne.

**Patentansprüche**

1. Kolbengesteuertes Stellventil, das aus einem Ventilgehäuse (10) mit Einlass- und Auslasskanälen (12, 14), deren Verbindung durch eine feste Verschlussklappe (16) unterbrochen werden kann, die an einer mit einem Steuerdruck beaufschlagten Kolben (20) verbundenen Stange (18) angebracht ist, einen drehbaren Kopf (24) mit einer Steuerdruckeinlassöffnung (22), dem in besagten Kopf angeordneten Antriebskolben (20), der Ventilklappe (16) und einer ersten und zweiten Rückstellfeder (34, 36) besteht, dadurch gekennzeichnet, dass die erste Rückstellfeder (34) eine schwache Druckfeder ist und die zweite Rückstellfeder (36) eine starke Druckfeder ist, die zwischen zwei «Tarierschürze» genannte Teile (38, 39) eingefügt sind, dass die eine «Tarierschürze» (39) gegenüber der anderen verschiebbar ist, wobei durch Vergrösserung ihrer Entfernung zum Antriebskolben (20) die Wirkung der zweiten Rückstellfeder (36) verringerbar ist, dass diese «Tarierschürze» (39) Nocken (40) besitzt, die, in Folge der Drehung der Einstellkappe (24') zum Vergrössern der Entfernung der «Tarierschürze» vom Antriebskolben, an im Gehäuse ausgesparten Führungen (44) entlang gleiten können.

2. Stellventil nach Anspruch 1, dadurch gekennzeichnet, dass der genannte drehbare Kopf (24) an seinen oberen und unteren Teilen Befestigungseinrichtungen (32, 32') besitzt, die seine Befestigung unabhängig von der Orientierung auf dem Ventilgehäuse (10) erlauben, mit dem Ziel, eine Funktionsstellung «normalerweise geschlossen», in der der Steuerdruck auf den Arbeitskolben einwirkt, und eine Funktionsstellung «normalerweise offen», in der der Steuerdruck unterhalb des Arbeitskolbens einwirkt, zu ermöglichen.

3. Stellventil nach einem der Ansprüche 1 oder 2, dadurch gekennzeichnet, dass die Kolbenstange (18') mit einer optischen Anzeigeeinrichtung (28, 28') versehen ist, die die Kontrolle der Funktionsstellung des Ventils ermöglicht.

**Claims**

1–A piston-driven valve of the type including a valve body (10) provided with inlet and outlet openings (12, 14) where the communication may be interrupted by a clack-valve (16) which is integral with a rod (18) connected to a piston (20) which is submitted to the valve-control pressure, said mentioned valve comprising a reversible head (24) provided with the inlet port (22) for admitting the control pressure, the driving piston (20) being located in said reversible head, on which the clack-valve (16) is mounted and first and second release springs (34, 36), said valve being characterized in that the first release spring (34) is a low pressure spring; the second reset spring (36) or high-pressure spring is located between two elements named calibrating bridges (38, 39), in that one of said calibrating bridges is movable with respect to the other in order to be moved aside from the driving piston (20) and for annihilating the action exerted by the second spring (36) and in that said movable calibrating bridge (39) includes snugs (40) which slide along ramps (44) formed on a body part named selecting cap (24') during the rotation of the latter, so as to hold said calibrating bridge away from said driving piston (20).

2–A valve according to claim 1, characterized in that said reversible head (24) includes in its upper and lower parts, fastening means (32, 32') allowing it to be mounted in one direction or in the other on said valve body (10), in order to obtain a working position corresponding to a «normally closed» working mode, where the control pressure exerts its action under the driving-piston, and a working position corresponding to a «normally open» working mode, where the control pressure exerts its action over the driving piston.

3–A valve according to claim 1 or 2, characterized in that the rod (18') of the driving piston is provided with an optical indicator (28, 28') for checking the working mode of the valve.

1/2

# FIG.1

# FIG.2

Fig.3

Fig.4

Fig.5